# EUROPÄISCHE PATENTANMELDUNG

(11) **EP 1 869 971 A1**
(43) Veröffentlichungstag der Anmeldung: **26.12.2007**
(21) Anmeldenummer: 07010655.4
(22) Anmeldetag: 30.05.2007
(51) Int. Cl.: A01G 13/02

(54) **Vorrichtung zum Schutz von Weinreben vor Hagelschlag**

(30) Priorität: 20.06.2006 DE 102006028273
(71) Anmelder: Wagner GmbH, 79238 Ehrenkirchen (DE)
(72) Erfinder: Wagner, Kurt, 79238 Ehrenkirchen (DE)
(74) Vertreter: Kirchgaesser, Johannes

(57) **Zusammenfassung**

Die vorliegende Vorrichtung dient in erster Linie zum Schutz von Weinreben, bei welchen die an Pfosten (1) und Spanndrähten (2) spalierartig angebauten Rebenreihen (3) durch abrollbare Abdeckplanen abdeckbar sind. Um die Weinreben vor plötzlich einsetzenden Unwettern wie Hagelschlag, Sturm oder starken Regen schnell und wirksam schützen zu können, wird erfindungsgemäß vorgeschlagen, dass die Rebenreihen (3) mittels Schutznetzen (4) seitlich abdeckbar sind, welche an ihren oberen Randstreifen (5) mit dem im oberen Bereich der Rebenreihe (3) verlaufenden Spanndraht (6) fest verbunden und mit ihren unteren Randstreifen (7) am Außenmantel eines verdrehfesten Rohres (8) befestigt sind, welches bis in die obere Lage aufrollbar und dort in einer Warteposition verankerbar ist.

Diese Vorrichtung ist nicht auf den Schutz von Weinreben beschränkt sondern grundsätzlich geeignet für den Schutz von Pflanzkukuren aller Art wie beispielsweise von Obstanlagen, Spargelfelder und andere Sonderkulturen, die man vor derartigen Unwettern schützen muss.

## Beschreibung

Die Erfindung betrifft eine Vorrichtung zum Schutz von Weinreben, bei welcher die an Pfosten und Spanndrähten spalierartig angebauten Rebenreihen durch aufrollbare Abdeckplanen vor plötzlich auftretenden Unwettern wie bsp. Hagelschlag, Sturm oder starkem Regen geschützt werden. Hierbei kommt es darauf an, dass sich die aufgerollten Abdeckmittel im Bedarfsfall an den zu schützenden Rebreihen schnell und problemlos ausbringen und nach dem Unwetter auch wieder einholen lassen, damit die Weinreben gut durchlüftet und der Sonneneinstrahlung ausgesetzt werden.

Aus der EP 0 878 125 B1 ist bereits eine derartige Vorrichtung zum Schutz von Pflanzungen gegen Frost und Hagel bekannt, welche es erlaubt, Weinberge oder andere Pflanzungen mit einer Schutzdecke über Nacht abzudecken und diese morgens wieder aufzudecken, damit die Pflanzen von der Sonne profitieren können. Diese bekannte Vorrichtung enthält zwei Planen, die sich mittels eines Federsystems aufrollen und die am Ende von metallischen Bügeln befestigt sind, welche auf die Pfosten aufgesteckt werden können.

Die Schutzdecken bzw. Abdeckplanen sind hierbei so konzipiert, dass von der Rebenreihe, auf der die Bügel aufgesteckt sind, nach jeder Seite zwei benachbarte Rebenreihen mit abgedeckt werden können. Die Planen besitzen auf ihrer Längsseite zur Versteifung eine kleine Stange und mehrere Ringe. Das Entrollen der Plane geschieht mit Hilfe eines Stabes, der einen Haken besitzt. Mit diesem Haken erfasst man die Ringe der Plane, zieht diese über die zwei benachbarten Rebenreihen bis auf den Boden und hängt dann die Ringe in am Boden befestigte Haken ein. Um die Pflanzung aufzudecken, werden die Ringe am Boden ausgehängt und die Planen rollen sich von selbst auf.

Diese Abdeckvorrichtung ist von der Konstruktion her sehr kostspielig und auch umständlich zu bedienen. Sie mag zwar zum Schutz vor Nachtfrost hilfreich sein, doch wird bezweifelt, ob sie auch bei Hagelschlag schnell genug ausgebracht werden kann und im waagerecht überdeckenden Bereich gegen größere Hagelkörner überhaupt einen wirksamen Schutz bietet.

Deshalb ist es Aufgabe der Erfindung, zur Vermeidung von Hagelschäden eine Schutzvorrichtung zu schaffen, welche nicht nur billiger als die bekannte Vorrichtung herzustellen und einfacher an den Rebenreihen anzubringen ist, sondern auch bei Ankündigung eines Hagelunwetters mit geringem Arbeitsaufwand von wenigen Händen schnell ausgebracht werden kann.

Zur Lösung dieser Aufgabe wird vorgeschlagen, dass die Rebenreihen mittels Schutznetzen seitlich abdeckbar sind, welche an ihren oberen Randstreifen mit dem im oberen Bereich der Rebenreihe verlaufenden Spanndraht fest verbunden und mit ihren unteren Randstreifen am Außenmantel eines verdrehfesten Rohres befestigt sind, welches bis in die obere Lage aufrollbar und dort in einer Warteposition verankerbar ist.

Diese Vorrichtung bietet gegenüber der bekannten Schutzvorrichtung den großen Vorteil, dass das aufgerollte Schutznetz lediglich an beiden Enden aus der Verankerung in der Warteposition befreit werden muss und dann aufgrund der Schwerkraft von selbst an den Reben vorbei herunterfällt. Es genügt somit, wenn zwei Mann an den Enden der Rebenreihen vorbeigehen und bei jeder Rebenreihe auf der Wetterseite die Schutznetzrolle lösen.

Damit die Schutznetze an den abstehenden Seitentrieben der Weinreben problemlos vorbei fallen, ist es nach einem weiteren Merkmal der Erfindung zweckmäßig, wenn die Pfosten im oberen Bereich mit Querstegen versehen sind, an welchen der Spanndraht entsprechend dem seitlichen Platzbedarf der Reben im Abstand von den Pfosten verspannt sind.

Nach einer weiteren Ausgestaltung der Erfindung sind die Rohre an ihren Enden mit flachen Platten verdrehsicher verbunden, welche zum Einhängen in Haken jeweils ein Loch aufweisen und zum Aufrollen der Netze mittels einer Handkurbel als Angriffsfläche dienen. Die Handkurbel lässt sich einfach auf die flache Platte aufstecken, um das Schutznetzrohr bis in die obere Position zu drehen.

Bei einer etwas komfortableren Ausführungsform der Erfindung sind die Rohre zum Aufrollen der Netze an ihren Enden jeweils mit einem Schlepprad verbunden und oberhalb des Spanndrahtes an Querstegen Kettenräder zum Erfassen von Gliederketten drehbar gelagert, welche vom Spanndraht über die Schleppräder zu den Kettenrädern geführt sind. Durch diesen Kettenantrieb sind die Netzrohre auf und ab bewegbar und werden gleichzeitig in ihrer jeweiligen Endposition gehalten. Um das Auf- und Abrollen zu erleichtern, können die Kettenräder zu jedem Schlepprad mittels Kraftmotoren über Fernbedienung angetrieben werden.

In der Zeichnung sind mehrere Ausführungsbeispiele der Erfindung dargestellt und sollen in der nachfolgenden Beschreibung näher erläutert werden. Es zeigen:

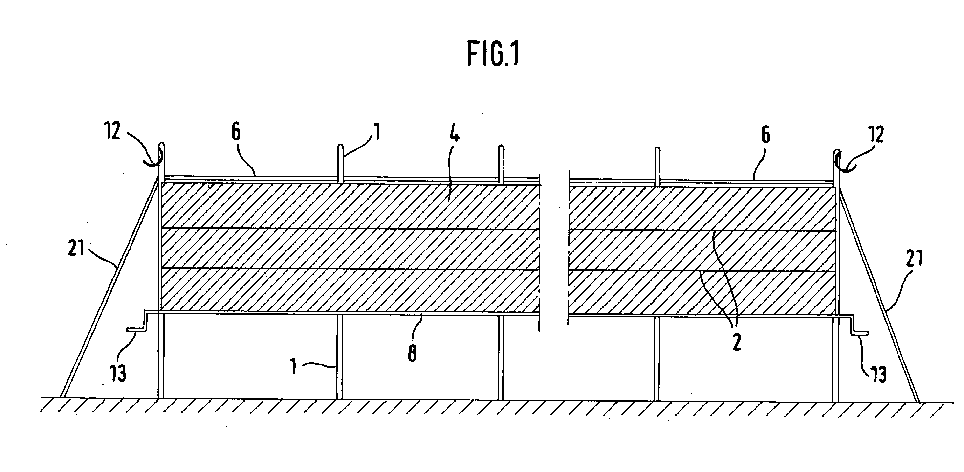

- Fig. 1: Ein Ausführungsbeispiel der Schutzvorrichtung mit seitlich an der Rebenreihe heruntergelassenem Schutznetz in Seitenansicht,
- Fig. 2: die gleiche Schutzvorrichtung in Vorderansicht,
- Fig. 3: die gleiche Schutzvorrichtung im aufgerollten und eingehängten Zustand des Schutznetzes,
- Fig. 4: ein anderes Ausführungsbeispiel der Schutzvorrichtung mit heruntergelassenem Schutznetz in Seitenansicht,
- Fig. 5: das gleiche Ausführungsbeispiel im aufgerollten und gesicherten Zustand des Schutznetzes,
- Fig. 6: das vergrößerte Ende eines Netzrohres mit Flachplatte und Loch zum Einhängen bei aufgesteckter Handkurbel in Seitenansicht,
- Fig. 7: die gleiche Darstellung vor dem Aufstecken der Handkurbel mit Teilschnitt durch die Flachplatte und das Aufsteckteil in Draufsicht,
- Fig. 8: eine andere Ausbildung des Netzrohres mit Doppelhaken an beiden Enden zum Einhängen auf ein Halterohr,
- Fig. 9: das gleiche Netzrohr in Ansicht des Pfeils A nach Figur 8 am Pfosten mit einem seitlich abstehenden Halterohr mit eingehängtem Doppelhaken in der Halteposition,
- Fig. 10: das gleiche Bild mit ausgehängtem Doppelhaken,
- Fig. 11: einen Pfosten mit einem anderen Haltemechanismus für das Halterohr mit eingehängtem Doppelhaken,
- Fig. 12: das gleiche Bild mit herunter geklapptem Halterohr und ausgehängtem Doppelhaken,
- Fig. 13: einen vergrößerten Querschnitt durch das Netzrohr mit Befestigungsmittel zur Befestigung des unteren Randstreifens am Außenmantel des Rohres,
- Fig. 14: das gleiche Rohr mit einer anderen Befestigungsart für den unteren Randstreifen am Außenmantel des Netzrohres und
- Fig. 15: eine Klammer zur Befestigung des oberen Randstreifens auf dem Spanndraht, a) vor dem Aufdrücken der Klammer und b) nach dem Umschließen des Randstreifens am Spanndraht und Andrücken der Klammer.

Die in den Figuren dargestellte Vorrichtung dient zum Schutz von Pflanzkulturen aller Art, insbesondere von Weinreben vor plötzlich einsetzenden Unwettern wie Hagelschlag, Sturm oder starkem Regen, wobei diese Unwetter je nach Stärke und Größe der Hagelkörner in der Lage sind, die Äste oder Früchte schwer zu beschädigen und im schlimmsten Fall die Ernte eines Jahres zu zerstören.

Um die an Pfosten 1 und Spanndrähten 2 spalierartig angebauten Rebenreihen 3 schnell und wirksam vor solchen Unwettern schützen zu können, sind zur seitlichen Abdeckung der Rebenreihen Schutznetze 4 vorgesehen, welche mit ihren oberen, verstärkten Randstreifen 5 mit dem im oberen Bereich der Rebenreihe 3 verlaufenden Spanndraht 6 fest verbunden sind. Die Pfosten 1 werden üblicherweise in Höhe des oberen Spanndrahtes 6 durch schräg nach unten verlaufende Sicherheitsdrähte 21 am Boden fest verankert. Mit ihren unteren, verstärkten Randstreifen 7 sind die Schutznetze 4 am Außenmantel eines verdrehfesten Rohres 8 befestigt, welches bis an den oberen Rand 5 aufrollbar ist und dort in einer Warteposition lösbar verankert wird.

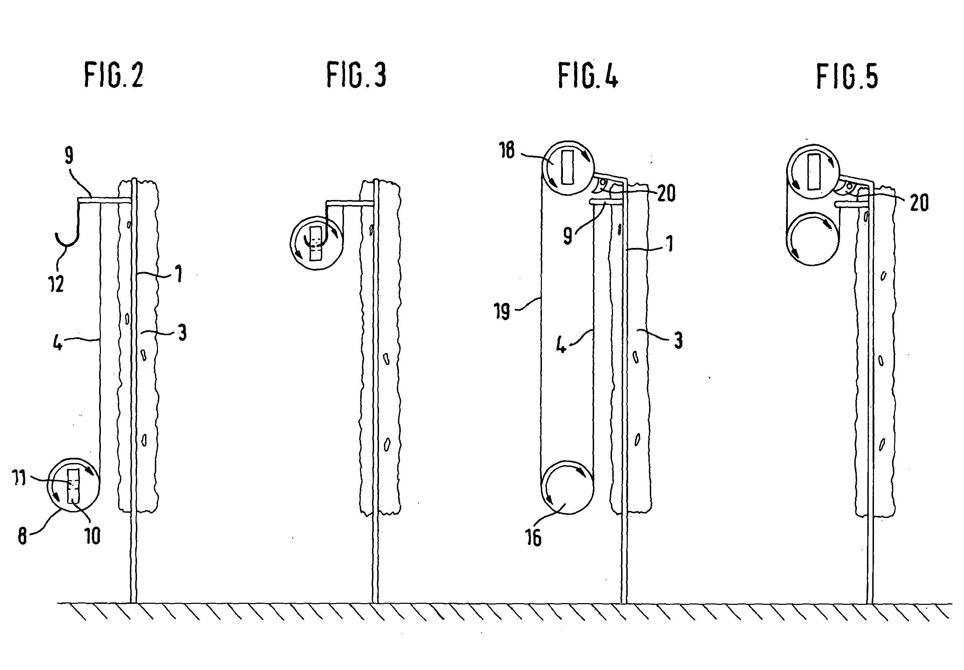

Wie aus den Figuren 2 und 3 ersichtlich, ragen an den oberen Enden der Pfosten 1 Querstege 9 seitlich ab, an welchen der obere Spanndraht 6 entsprechend dem seitlichen Platzbedarf der Rebenreihe 3 im Abstand von den Pfosten 1 befestigt ist. Dadurch wird erreicht, dass das Schutznetz 4 beim Herunterfallen problemlos an den seitlich abstehenden Seitentrieben der Weinreben vorbei geht.

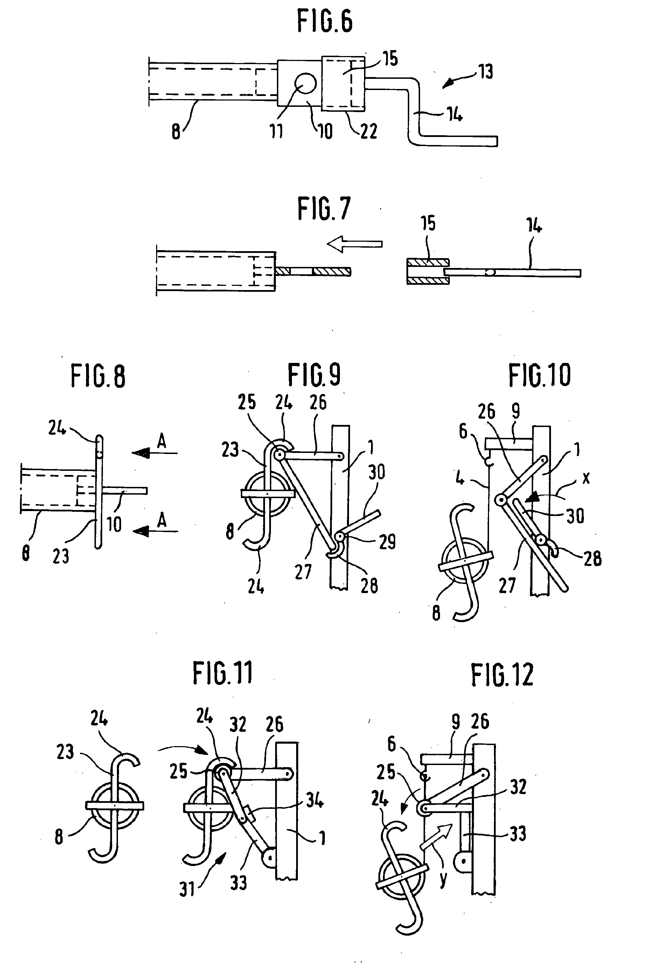

Um das verdrehfeste Rohr 8 mit dem am Außenmantel verbundenen Schutznetz 4 aus der unteren Abdeckposition in die obere Warteposition ohne große Kraftanstrengung aufrollen zu können, sind die Rohre 8 an ihren Enden mit flachen Platten 10 verdrehfest verbunden. Diese können, wie aus Figur 6 und 7 ersichtlich, jeweils ein Loch 11 zum Einhängen in Haken 12 aufweisen, die an den Pfosten 1 beziehungsweise an den Querstegen 9 seitlich angebracht sind. Zum Abrollen des Schutznetzes 4 muss dann lediglich die Netzrolle 8 etwas angehoben und das Loch 11 vom Haken 12 abgehängt werden.

Die flache, gelochte Platte 10 dient gleichzeitig als Kraftübertragungsfläche für eine in Figur 6 und 7 dargestellte Handkurbel 13, welche an einem Ende der Kurbelstange 14 mit zwei flachen Aufsteckplatten 15 verschweißt oder sonst wie verbunden ist. Diese Aufsteckplatten 15 bilden zusammen mit den beiden Querplatten 22 ein im Querschnitt rechteckiges Innenprofil und können zum Aufdrehen des Schutznetzes 4 auf die flache Platte 10 der Netzrolle 8 aufgesteckt werden.

Diese flache, gelochte Platte 10, die auch als flache Öse ausgebildet sein kann, wird zweckmäßigerweise an beiden Enden der Netzrolle 8 vorgesehen, damit die Netzrolle 8 wahlweise oder gleichzeitig an beiden Seiten erfasst und hochgedreht werden kann.

Diese Schutznetze 4 werden vorzugsweise nur an derjenigen Seite der Rebenreihen 3 angebracht, wo nach der Wetterprognose der Wind herkommt. Sie können jedoch auf beiden Seiten angebracht und dann im Bedarfsfall herunter gelassen werden, falls damit zu rechnen ist, dass die Hagelkörner im wesentlichen senkrecht herunterfallen.

Bei dem in den Figuren 4 und 5 dargestellten, etwas komfortableren Ausführungsbeispiel der Erfindung sind die Rohre 8 zum Aufrollen der Schutznetze 4 an ihren Enden jeweils mit einem Schlepprad 16 verbunden. Außerdem ist oberhalb des Spanndrahtes 6 bzw. des Quersteges 9 an den Pfosten 1 noch ein weiterer Haltesteg 17 angebracht, an dessen vorderem Ende ein Kettenrad 18 zum Erfassen einer Gliederkette 19 drehbar gelagert ist. Diese Gliederkette 19 ist am oberen Spanndraht 6 eingehängt und von diesem über das Schlepprad 16 zum Kettenrad 18 geführt. Durch Drehen des Kettenrades 18 lässt sich dann das Netzrohr 8 wie bei einem Flaschenzug von der unteren Abdeckposition (Figur 4) in die obere Warteposition (Figur 5) hoch bewegen.

Dies kann, wie im Ausführungsbeispiel angedeutet, genau wie bei Figur 2 und 3 über eine Handkurbel 13 erfolgen, wobei in der oberen Lage durch Entriegeln einer Sperrklinke 20 das Kettenrad 18 schnell gelöst und dadurch die Gliederkette 19 freigegeben wird, so dass die Netzrolle 8 mit dem Schutznetz 4 aufgrund der Schwerkraft von selbst in die Abdeckposition herunterfällt.

Um das Aufrollen zu erleichtern, können die Kettenräder 18 anstelle mit einer Handkurbel 13 auch mittels Kraftmotoren beispielsweise elektrisch, hydraulisch oder pneumatisch angetrieben werden, wobei die Betätigung der Kraftmotoren dann zweckmäßigerweise durch eine Fernbedienung erfolgen kann.

In den Figuren 8 bis 12 sind zwei weitere Möglichkeiten der Verankerung des Netzrohres 8 in der oberen Halteposition dargestellt, bei welchen das Netzrohr 8 an seinen Enden mit einer Stange 23 verdrehfest verbunden ist, welche an ihren Enden zwei entgegengesetzt ausgeformten Haken 24 aufweist.

Der bei Aufrollen des Netzes sich in der oberen Lage befindliche Haken 24 kann, wie aus Figur 9 ersichtlich, auf ein Halterohr 25 eingehängt werden, welches am Pfosten 1 über eine waagerechte Haltestange 26 schwenkbar gelagert ist. Das Halterrohr 25 ist mit einer weiteren schräg nach unten gerichteten Stützstange 27 drehbar verbunden, welche an ihrem unteren Ende auf eine Stützschale 28 aufliegt, die am Pfosten 1 kippbar gelagert ist. Diese Stützschale 28 ist hinter dem Lager 29 mit einem Hebel 30 verbunden, welcher zum Freigeben des Netzrohres 8 in Richtung des Pfeils "X" herumgeschwenkt wird.

Bei der Ausführungsform nach Figur 11 und 12 ist der Haltemechanismus ähnlich aufgebaut wie in Figur 9 und 10 mit dem Unterschied, dass die Halterolle 25 über einen so genannten Knickhebel 31 mit dem Pfosten 1 gelenkig verbunden ist. Dieser Knickhebel 31 besteht aus einer oberen Stützstange 32 und einer etwa gleich langen unteren Stützstange 33, die am Pfosten 1 schwenkbar gelagert ist. Die beide Stützstangen 32 und 33 sind ihrerseits an ihren freien Enden schwenkbar gelagert, wobei am Ende der unteren Stützstange 33 eine Anschlagplatte 34 vorgesehen, welche - ähnlich wie eine Kniescheibe - dafür sorgt, dass sich die Stützstangen 32 und 33 nur in Richtung des Pfeils Y wegdrücken lassen und in der in Figur 11 gezeigten Lage dagegen im so genannten toten Punkt blockiert sind. In dieser Lage wirken die beiden Stützstangen 32 und 33 wie eine feste Stützstange und geben dem Halterohr 25 so einen Halt. Zum schnellen Lösen des Netzrohres 8 muss dann nur der Knickhebel 31 in Richtung des Pfeils "Y" zum Pfosten 1 hin weg gedrückt werden und der Haken 24 kann von dem Halterohr 25 abspringen.

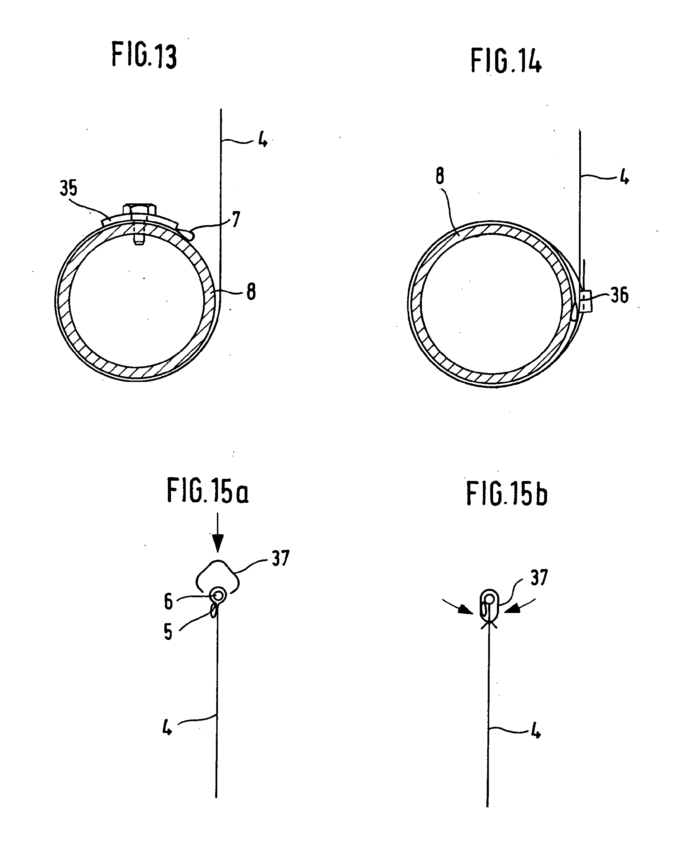

In den Figuren 13 und 14 sind beispielhaft zwei einfache Möglichkeiten gezeigt, wie der untere Netzstreifen 5 am Außenmantel des Netzrohres befestigt werden kann. Bei Figur 13 wird das Hagelnetz 4 einmal um das Rohr 8 gewickelt und dann mit einer dem Außenmantel angepassten Leiste 35 direkt hinter dem Randstreifen 7 angedrückt und verschraubt.

Bei Figur 14 wird das Netz 4 einmal um das Rohr 8 gewickelt und dann der Randstreifen 7 in regelmäßigen Abständen mit einem Kunststoffspannband 36 am Außenmantel verspannt, wobei das Spannband auch spiralförmig durch mehrere Netzlöcher hindurchgeführt werden kann.

Figur 15 zeigt eine einfache und kostengünstige Befestigungsart für den oberen Randstreifen 5 am oberen Spanndraht 6. Die Befestigung kann beispielsweise mit einer im Handel erhältlichen Metallklammer 37 vorgenommen werden. Hierzu wird der obere Randstreifen 5 um den Spanndraht 6 gelegt und dann die Klammer 37 von oben auf den Draht aufgelegt und an ihren nach innen gewinkelten Enden, wie aus Figur 15 b) ersichtlich, zusammengedrückt.

Diese Vorrichtung ist nicht auf den Schutz von Weinreben beschränkt sondern grundsätzlich geeignet für den Schutz von Pflanzkulturen aller Art wie beispielsweise von Obstanlagen, Spargelfelder und andere Sonderkulturen wie Erdbeerfelder, die vor derartigen Unwettern geschützt werden müssen. Hierbei sollte die Führung von zwei am oberen Spanndraht 6 angebrachten Netzen 4 so ausgeführt sein, dass diese je nach Form und seitlicher Ausladung der Pflanzkulturen auf schrägen oder auch bogenförmigen Führungsbahnen an den Ästen oder Trieben vorbei seitlich herunterfallen können.

## Patentansprüche

1. Vorrichtung zum Schutz von Weinreben vor Hagelschlag, bei welcher die an Pfosten (1) und Spanndrähten (2) spalierartig angebauten Rebenreihen (3) durch abrollbare Abdeckplanen abdeckbar sind, **dadurch gekennzeichnet, dass** die Rebenreihen (3) mittels Schutznetzen (4) seitlich abdeckbar sind, welche an ihren oberen Randstreifen (5) mit dem im oberen Bereich der Rebenreihe (3) verlaufenden Spanndraht (6) fest verbunden und mit ihren unteren Randstreifen (7) am Außenmantel eines verdrehfesten Rohres (8) befestigt sind, welches bis in die obere Lage aufrollbar und dort in einer Warteposition verankerbar ist.

2. Vorrichtung zum Schutz von Weinreben nach Anspruch 1, **dadurch gekennzeichnet, dass** die Pfosten (1) im oberen Bereich mit Querstegen (9) versehen sind, an welchen der Spanndraht (6) entsprechend dem seitlichen Platzbedarf der Rebenreihe (3) im Abstand von den Pfosten (1) verspannt ist.

3. Vorrichtung zum Schutz von Weinreben nach Anspruch 1, **dadurch gekennzeichnet, dass** die Rohre (8) an ihren Enden mit flachen Platten (10) verdrehsicher verbunden sind, welche zum Einhängen in Haken (12) jeweils ein Loch (11) aufweisen und zum Aufrollen der Netze (4) zum Aufstecken einer Handkurbel (13) als Kraftübertragungsfläche dienen.

4. Vorrichtung zum Schutz von Weinreben nach Anspruch 1, **dadurch gekennzeichnet, dass** die Rohre (8) zum Aufrollen der Netze (4) an ihren Enden jeweils mit einem Schlepprad (16) verbunden sind, und dass oberhalb des Spanndrahtes (6) an Querstegen (17) Kettenräder (18) zum Erfassen von Gliederketten (19) drehbar gelagert sind, welche vom Spanndraht (6) über die Schleppräder (16) zu den Kettenrädern (18) geführt sind, durch welche die Netzrohre (8) in ihre jeweilige Endposition bewegbar sind.

5. Vorrichtung zum Schutz von Weinreben nach Anspruch 1, **dadurch gekennzeichnet, dass** das Netzrohr (8) an seinen Enden mit einer radial angeformten Drehstange (23) verdrehfest verbunden ist, welche an ihren Enden zwei entgegengesetzt ausgeformte Haken (24) zum Einhängen auf ein Halterohr (25) aufweist.

6. Vorrichtung zum Schutz von Weinreben nach Anspruch 5, **dadurch gekennzeichnet, dass** das Halterohr (25) am Pfosten (1) über eine waagerechte Haltestange (26) schwenkbar gelagert und mit einer weiteren schräg nach unten gerichtete Stützstange (27) drehbar verbunden ist, welche an ihrem unteren Ende auf einer am Pfosten (1) kippbar gelagerten Stützschale (28) aufliegt, wobei die Stützschale (28) hinter ihrem Lager (29) mit einem Hebel (30) verbunden ist.

7. Vorrichtung zum Schutz von Weinreben nach Anspruch 5, **dadurch gekennzeichnet, dass** das Halterohr (25) über eine waagerechte Haltestange (26) und ein schräg nach unten gerichtetes Knickhebelsystem (31) mit dem Pfosten (1) gelenkig verbunden ist, wobei das Knickhebelsystem (31) aus zwei etwa gleich langen, gelenkig verbundenen Stützstangen (32) und (33) gebildet ist, die über eine Anschlagplatte (34) in ihrer Stützlage durch einen in Richtung auf den Pfosten (1) weg drückbaren toten Punkt blockiert sind.
